# EUROPEAN PATENT APPLICATION

(11) **EP 4 178 137 A1**
(43) Date of publication of application: **10.05.2023**
(21) Application number: 21852831.3
(22) Date of filing: 05.08.2021
(51) Int. Cl.: H04L 1/08

(54) **DATA TRANSMISSION METHOD AND APPARATUS, AND COMMUNICATION DEVICE**

(30) Priority: 05.08.2020 CN 202010780099
(71) Applicant: Vivo Mobile Communication Co., Ltd., Dongguan, Guangdong 523863 (CN)
(72) Inventor: WU, Yumin, Dongguan, Guangdong 523863 (CN)
(74) Representative: Carangelo, Pierluigi
(86) International application number: PCT/CN2021/110893
(87) International publication number: WO 2022/028531

(57) **Abstract**

This application discloses a data transmission method and apparatus and a communication device, and pertains to the field of communication technologies. In a case that the data transmission method applied to a terminal, the data transmission method includes following steps: sending first uplink data to a network side device; and retransmitting the first uplink data in a case that it is confirmed that failure of sending of the first uplink data occurs.

## Description

### CROSS-REFERENCE TO RELATED APPLICATION

This application claims priority to Chinese Patent Application No. 202010780099.7 filed in China on August 5, 2020, which is incorporated herein by reference in its entirety.

### TECHNICAL FIELD

This application pertains to the field of communication technologies, and in particular, relates to a data transmission method and apparatus, and a communication device.

### BACKGROUND

In an existing communication system, after a terminal (User Equipment, UE) sends uplink data by using a dedicated uplink resource, the terminal may start a timer, to receive feedback information of a network side device. If the terminal does not receive the feedback information of the network side device, or does not receive the feedback information of the network side device within preset time, the terminal considers that data transmission fails and discards the data transmission, which causes a loss of data. Consequently, reliability of data transmission between the terminal and the network side device is relatively low.

### SUMMARY

Embodiments of this application are to provide a data transmission method and apparatus, and a communication device, which can resolve a problem of relatively low data transmission reliability between a terminal and a network side device in a related technology.

To resolve the foregoing technical problem, this application is implemented as follows.

According to a first aspect, a data transmission method is provided and is applied to a terminal, and the method includes:
sending first uplink data to a network side device; and
retransmitting the first uplink data in a case that it is confirmed that failure of sending of the first uplink data occurs.

According to a second aspect, a data transmission method is provided and is applied to a network side device, and the method includes:
receiving first uplink data sent by a terminal; and
in a case that failure of sending of the first uplink data occurs, receiving the first uplink data retransmitted by the terminal.

According to a third aspect, a data transmission apparatus is provided and is applied to a terminal, and the apparatus includes:
a sending module, configured to send first uplink data to a network side device; and
a retransmission module, configured to retransmit the first uplink data in a case that it is confirmed that failure of sending of the first uplink data occurs.

According to a fourth aspect, a data transmission apparatus is provided and is applied to a network side device, and the apparatus includes:
a first receiving module, configured to receive first uplink data sent by a terminal; and
a second receiving module, configured to: in a case that failure of sending of the first uplink data occurs, receive the first uplink data retransmitted by the terminal.

According to a fifth aspect, a communication device is provided, including a processor, a memory, and a program or an instruction that is stored in the memory and that may execute on the processor, and when the program or the instruction is executed by the processor, the steps in the method described in the first aspect are implemented, or when the program or the instruction is executed by the processor, the steps in the method described in the second aspect are implemented.

According to a sixth aspect, a readable storage medium is provided. The readable storage medium stores a program or an instruction, and when the program or the instruction is executed by a processor, the steps in the method described in the first aspect are implemented, or the steps in the method described in the second aspect are implemented.

According to a seventh aspect, a chip is provided. The chip includes a processor and a communication interface, the communication interface is coupled to the processor, and the processor is configured to execute a program or an instruction of a network side device, to implement the method described in the first aspect or the method described in the second aspect.

In the embodiments of this application, the terminal sends the first uplink data to the network side device, and in a case that it is confirmed that failure of sending of the first uplink data occurs, the terminal may retransmit the first uplink data. In this way, in a case that data transmission fails, the terminal does not discard transmission of the data, but can retransmit data that fails to be transmitted, to avoid a loss of data. This increases a probability that the network side device successfully receives data, and improves reliability of data transmission between the terminal and the network side device.

### BRIEF DESCRIPTION OF DRAWINGS

FIG. 1 is a block diagram of a wireless communication system to which an embodiment of this application is applicable;
FIG. 2 is a flowchart of a data transmission method according to an embodiment of this application;
FIG. 3 is a flowchart of another data transmission method according to an embodiment of this application;
FIG. 4 is a structural diagram of a data transmission apparatus according to an embodiment of this application;
FIG. 5 is a structural diagram of another data transmission apparatus according to an embodiment of this application;
FIG. 6 is a structural diagram of a communication device according to an embodiment of this application;
FIG. 7 is a structural diagram of a terminal according to an embodiment of this application; and
FIG. 8 is a structural diagram of a network side device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some rather than all of the embodiments of this application. Based on the embodiments of this application, all other embodiments obtained by a person of ordinary skill in the art without creative efforts fall within the protection scope of this application.

Terms "first" and "second" in the specification and claims of this application are used to distinguish between similar objects, and do not need to be used to describe a specific order or sequence. It should be understood that data used in this way may be interchangeable in an appropriate case, so that the embodiments of this application can be implemented in a sequence other than those shown or described herein, and objects distinguished by "first" and "second" are generally of a same type, and a quantity of objects is not limited. For example, there may be one or more first targets. In addition, in the specification and the claims, "and/or" represents at least one of connected objects, and the character "/" generally represents an "or" relationship between associated objects.

It should be noted that the technology described in the embodiments of this application is not limited to a Long Term Evolution (Long Time Evolution, LTE)/LTE-advanced (LTE-Advanced, LTE-A) system, and may also be used in various wireless communication systems, for example, Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application are often used interchangeably. The described technology may be used in the foregoing system and radio technology, and may also be used in another system and radio technology. However, a New Radio (New Radio, NR) system is described below as an example, and the term NR is used in most of the descriptions, although these technologies can also be used in an application other than an application of the NR system, for example, a sixth (6^{th} Generation, 6G) communication system.

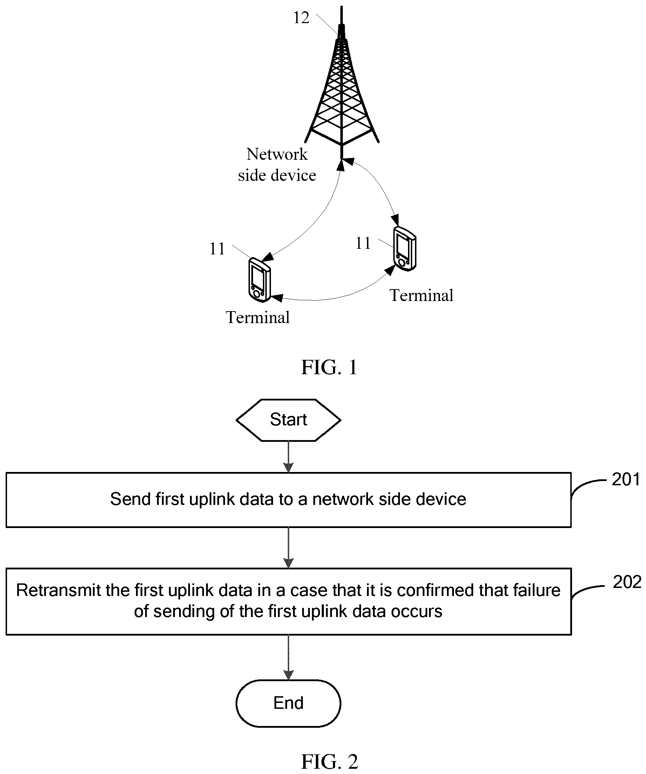

FIG. 1 is a block diagram of a wireless communication system to which an embodiment of this application is applicable. The wireless communication system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or a vehicle-mounted device (VUE), or a pedestrian terminal (PUE). The wearable device includes a band, a headset, eyeglasses, or the like. It should be noted that a specific type of the terminal 11 is not limited in this embodiment of this application. The network side device 12 may be a base station or a core network. The base station may be referred to as a NodeB, an evolved Node B, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a WiFi node, a transmitting receiving point (Transmitting Receiving Point, TRP), or another suitable term in the field provided that a same technical effect is achieved. The base station is not limited to a specific technical term. It should be noted that, in this application, only a base station in an NR system is used as an example, but a specific type of the base station is not limited.

A data transmission method provided in the embodiments of this application is described in detail below with reference to the accompanying drawings by using specific embodiments and application scenarios thereof.

FIG. 1 is a flowchart of a data transmission method according to an embodiment of the present disclosure. The data transmission method is applied to a terminal. As shown in FIG. 1, the data transmission method includes the following steps.

Step 201: Send first uplink data to a network side device.

It should be noted that the terminal may send the first uplink data by using a dedicated uplink resource or an uplink resource in a random access process. Optionally, before step 201, the method may further include:
receiving first configuration information sent by the network side device, where the first configuration information is used to instruct the terminal to send uplink data by using a target uplink resource, and the target uplink resource includes any one of the following: a dedicated uplink resource and an uplink resource in a random access process.

Optionally, the dedicated uplink resource may be a dedicated physical uplink shared channel (Physical Uplink Shared Channel, PUSCH) resource. For example, the network side device may configure pur-Config for a terminal in an inactive (inactive) state in a radio resource control (Radio Resource Control, RRC) release message. The configuration indicates that the terminal in the inactive state sends an uplink data-specific PUSCH uplink resource.

Optionally, the sending the first uplink data to the network side device includes: A terminal in an idle (idle) state or an inactive (inactive) state sends the first uplink data by using a dedicated uplink resource, where the first uplink data may be understood as small data (small data). It should be noted that the small data is data whose data size is less than a preset quantity of bytes (for example, data whose data volume is less than 10 bytes).

Optionally, step 201 may be:
send the first uplink data to the network side device by using the target uplink resource based on the first configuration information.

It may be understood that, in a case that the terminal receives the first configuration information sent by the network side device, the terminal can send the first uplink data by using the dedicated uplink resource configured by the network side device, or send the first uplink data by using the uplink resource in the random access process.

Step 202: Retransmit the first uplink data in a case that it is confirmed that failure of sending of the first uplink data occurs.

It should be noted that retransmission of the first uplink data may be directed to retransmission or re-sending of the first uplink data by the network side device, to increase a probability that the network side device successfully receives the first uplink data, and increase reliability of data transmission between the terminal and the network side device.

In this embodiment of this application, failure of sending the first uplink data is confirmed by using any one of the following:
feedback information sent by the network side device is not received within preset time; and
receiving failure indication information sent by the network side device is received.

In an implementation, after sending the first uplink data to the network side device, if the terminal does not receive, within preset time, feedback information sent by the network side device, the terminal may confirm or determine that failure of sending of the first uplink data occurs. For example, the terminal starts a timer (for example, a pur-Response Window Timer) after sending the first uplink data. During running of the timer, the terminal does not receive a receiving feedback that is sent by the network side device and that is for the first uplink data, and then determines that failure of sending of the first uplink data occurs, or may determine that the pur-Response Window Timer expires.

In another implementation, after sending the first uplink data to the network side device, if the receiving failure indication information sent by the network side device is received, the terminal may also confirm that failure of sending of the first uplink data occurs. For example, the terminal may start a timer (for example, a pur-Response Window Timer) after sending the first uplink data by using a hybrid automatic repeat request (Hybrid automatic repeat request, HARQ) process 1. During running of the timer, if a receiving feedback that is sent by the network side device and received by the terminal and that is for the first uplink data is a receiving failure, for example, a received receiving feedback about the HARQ process 1 is a negative acknowledgement NACK, or the network side device instructs, by using downlink control information (Downlink Control Information, DCI), the terminal to send new data by using the HARQ process 1, the terminal confirms that failure sending of the first uplink data occurs.

In this embodiment of this application, the terminal sends the first uplink data to the network side device, and in a case that it is confirmed that failure of sending of the first uplink data occurs, the terminal may retransmit the first uplink data. In this way, in a case that data transmission fails, the terminal does not discard transmission of the data, but can retransmit data that fails to be transmitted, to avoid a loss of data. This increases a probability that the network side device successfully receives data, and ensures smoothness of data exchange between the terminal and the network side device.

Optionally, the retransmitting the first uplink data includes: retransmitting the first uplink data in a case that a first preset condition is met, where the first preset condition includes at least one of the following:
that a first timer corresponding to the first uplink data expires, where the first timer is configured to allow to retransmit the first uplink data in a case that the first timer expires; and
that a second timer corresponding to the first uplink data is in a running state, where the second timer is configured to prohibit new uplink data transmission within a running period.

For example, in a case that the first timer corresponding to the first uplink data expires, the terminal retransmits the first uplink data that fails to be sent. It should be noted that it is allowed to retransmit the first uplink data in a case that the first timer expires. In some implementations, the first timer may also be referred to as a retransmission timer. For example, after sending first uplink data of the HARQ process-1, the terminal starts a retransmission timer (such as retransmissionTimer) corresponding to the first uplink data. If the retransmission timer expires, the terminal may retransmit the first uplink data.

Alternatively, in a case that the second timer corresponding to the first uplink data is in a running state, the terminal retransmits the first uplink data that fails to be sent, and it is allowed to retransmit the first uplink data in a case that the second timer expires. In some implementations, the second timer may also be referred to as a new transmission prohibition timer. For example, after sending first uplink data of the HARQ process-1, the terminal starts a new transmission prohibit timer (such as configureGrantTimer) corresponding to the first uplink data. If the new transmission prohibit timer is still running, or the new transmission prohibit timer is not stopped or restarted, the terminal retransmits the first uplink data.

Further, a start condition or restart condition of at least one of the first timer and the second timer includes any one of the following:
the terminal sends second uplink data;
the terminal retransmits the first uplink data; and
the feedback information sent by the network side device is not received within the preset time.

It may be understood that the second uplink data is different from the first uplink data. That the terminal sends the second uplink data may also be expressed as that the terminal sends the new data. In this case, the terminal may start or restart the first timer and/or the second timer. Alternatively, in a case that the terminal retransmits the first uplink data, the terminal may also start or restart the first timer and/or the second timer.

In addition, when sending the first uplink data to the network side device, the terminal may start the first timer. If no feedback information sent by the network side device for a receiving feedback of the first uplink data is received within preset time, the terminal may restart the first timer, and/or start the second timer.

In this embodiment of this application, a stopping condition of the first timer and the second timer may be further limited. Optionally, in a case that the second preset condition is met, the first timer stops, where the second preset condition includes any one of the following:
that feedback information sent by the network side device is received;
that the second timer stops;
that the second timer expires; and
that the second timer is restarted.

It may be understood that the terminal starts the first timer when sending the first uplink data to the network side device, to time sending the first uplink data. When the first timer stops, timing stops. For example, after sending the first uplink data, if the terminal receives the feedback information that is sent by the network side device for the receiving feedback of the first uplink data, the terminal may stop the first timer regardless of whether the feedback information indicates that receiving of the first uplink data fails or succeeds.

The second timer is used to prohibit new uplink data transmission within a running period, and if the second timer stops, the second timer does not prohibit new uplink data transmission, and the terminal can also transmit new data, so that the first timer for timing the first uplink data may be stopped. Alternatively, if the second timer expires or is restarted, the first timer may be stopped.

Optionally, in a case that a third preset condition is met, the second timer stops, where the third preset condition includes: that feedback information sent by the network side device is received. In other words, after sending the first uplink data, if the terminal receives the feedback information that is sent by the network side device for the receiving feedback of the first uplink data, the terminal may stop the second timer regardless of whether the feedback information indicates that receiving of the first uplink data fails or succeeds.

In this embodiment of this application, the feedback information sent by the network side device is used to indicate any one of the following:
the first uplink data is received successfully;
the first uplink data fails to be received; and
the terminal sends the second uplink data.

It may be understood that after the terminal sends the first uplink data to the network side device, the network side device can send feedback information that is for the receiving feedback of the first uplink data to the terminal. If the network side device receives the first uplink data, the feedback information may indicate that receiving of the first uplink data succeeds. If the network side device does not receive the first uplink data, the feedback information may indicate that failure of sending of the first uplink data occurs, or may indicate that the terminal sends the second uplink data, that is, instructs the terminal to send the new data. Alternatively, in a case that the network side device successfully receives the first uplink data, the feedback information may also instruct the terminal to send the second uplink data.

In this embodiment of this application, the resource for retransmitting the first uplink data includes any one of the following:
the dedicated uplink resource; and
the uplink resource in the random access process.

In other words, the terminal sends the first uplink data to the network side device by using the dedicated uplink resource. In a case that failure of sending of the first uplink data occurs, the terminal may still retransmit the first uplink data by using the dedicated uplink resource.

Alternatively, the terminal sends the first uplink data to the network side device by using the dedicated uplink resource. In a case that failure of sending of the first uplink data occurs, the terminal may retransmit the first uplink data by using the uplink resource in the random access process.

Alternatively, after the terminal fails to send the first uplink data to the network side device by using the uplink resource in the random access process, the terminal still retransmits the first uplink data by using the uplink resource in the random access process. Alternatively, after the terminal fails to send the first uplink data to the network side device by using the uplink resource in the random access process, the terminal may retransmit the first uplink data by using the dedicated uplink resource.

In this embodiment of this application, retransmission resources for retransmitting the first uplink data may be in a same resource type, or may be in different resource types, such as a random access channel (Random Access Channel, RACH) uplink resource or a preconfigured uplink resource (Preconfigured Uplink Resource, PUR).

Optionally, the retransmitting the first uplink data includes any one of the following:
in a case that the first uplink data is stored in a buffer, extracting the first uplink data from the buffer, and retransmitting the first uplink data by using a hybrid automatic repeat request HARQ process corresponding to a retransmission resource;
obtaining a first HARQ process for sending the first uplink data, and in a case that a HARQ process corresponding to the retransmission resource is the first HARQ process, retransmitting the first uplink data by using the first HARQ process corresponding to the retransmission resource; and
obtaining a first HARQ process for sending the first uplink data, and in a case that a HARQ process corresponding to the retransmission resource is a second HARQ process, retransmitting the first uplink data by using the second HARQ process corresponding to the retransmission resource.

In a first implementation, the terminal may store the first uplink data in a specific buffer. When retransmitting the first uplink data, the terminal extracts the first uplink data from the specific buffer, and places the first uplink data in a HARQ process corresponding to a retransmission resource for retransmission. For example, when the terminal sends the first uplink data by using the dedicated uplink resource (such as an uplink grant-1), the terminal stores the first uplink data (such as a MAC PDU-1) in a specific preset resource (such as an Msg3/MsgA/PUR buffer). When the terminal retransmits the first uplink data by using a retransmission resource (such as an uplink grant-2), the terminal extracts the first uplink data from the specific buffer, and sends the first uplink data by using a HARQ process corresponding to the retransmission resource.

In a second implementation, when the terminal sends the first uplink data by using the dedicated uplink resource (such as an uplink grant-1), the terminal transmits the first uplink data (such as a MAC PDU-1) by using a HARQ process-1. When the terminal retransmits the first uplink data by using a retransmission resource (such as an uplink grant-2), if a HARQ process corresponding to the retransmission resource is also the HARQ process-1, the terminal retransmits the first uplink data by using the HARQ process-1 corresponding to the retransmission resource.

In a third implementation, when the terminal sends the first uplink data by using the dedicated uplink resource (such as an uplink grant-1), the terminal transmits the first uplink data (such as a MAC PDU-1) by using a HARQ process-1. When a HARQ process corresponding to a retransmission resource (such as an uplink grant-2) of the terminal is a HARQ process-2, the terminal may retransmit data (that is, the first uplink data) of the HARQ process-1 by using the retransmission resource and by using a HARQ process-2.

It should be noted that a data size capable of sending by the retransmission resource may be the same as a data size of the first uplink data. For example, if a data size of the first uplink data MAC PDU-1 sent by the terminal is 10 bytes, it may be limited that the data size capable of sending by the retransmission resource also needs to be 10 bytes.

Alternatively, a data size capable of sending by the retransmission resource may also be different from a data size of the first uplink data. In a case that the data size capable of sending by the retransmission resource is different from the data size of the first uplink data, the first uplink data is retransmitted through a retransmission channel after being reconstructed. A data size of the reconstructed first uplink data matches the data size that can be sent by the retransmission resource. For example, if a data size of the first uplink data MAC PDU-1 sent by the terminal is 10 bytes, and the data size capable of sending by the retransmission resource is 20 bytes, the terminal may perform construction according to the data of the MAC PDU-1 and regenerate a 20-byte MAC PDU-2, and then send the MAC PDU-2 by using the retransmission resource.

In this embodiment of this application, a time location of the retransmission resource is determined by using any one of the following:
a time location at which the terminal determines to perform retransmission; and
a preset quantity of time locations after the time location at which the terminal determines to perform retransmission.

For example, after determining the time location at which retransmission needs to be performed, the terminal determines a recently available retransmission resource at the time location, and then determines a time location of the retransmission resource. Alternatively, the terminal determines a preset quantity of time locations after the time location at which retransmission needs to be performed, and determines a recently available retransmission resource after the preset time location, to determine a time location of the retransmission resource.

Optionally, the method further includes:
stopping transmission of the first uplink data in a case that a fourth preset condition is met, where the transmission includes sending and retransmission, and the fourth preset condition includes any one of the following:
that second configuration information sent by the network side device is received, where the second configuration information is used to indicate a quantity of transmission times or transmission duration of the first uplink data;
a quantity of transmission times or transmission duration of the first uplink data specified in a protocol; and
that preset instruction information is received, where the preset instruction information is used to instruct to stop transmission of the first uplink data.

In this embodiment of this application, the terminal may stop sending or retransmitting the first uplink data according to a configuration of the network side device or a condition specified in a protocol.

For example, in an implementation, the terminal receives second configuration information sent by the network side device, where the second configuration information is used to indicate a quantity of transmission times or transmission duration of the first uplink data. Based on the second configuration information, the terminal can stop sending or retransmitting the first uplink data after a condition of the quantity of transmission times or the transmission duration is met.

For example, the network side device configures a quantity of retransmission times that the first uplink data is retransmitted by using a retransmission resource that is automatically selected by the terminal as three times (in this case, the first uplink data is retransmitted for a total of four times). Alternatively, the network side device configures a total quantity of transmission times that the first uplink data is transmitted by using a retransmission resource that is automatically selected by the terminal as four times (in this case, the first uplink data is retransmitted for three times). Alternatively, the network side device configures total data transmission duration in which the first uplink data is retransmitted by using a retransmission resource that is automatically selected by the terminal as 20 ms. After sending the first uplink data, the terminal starts a transmission duration timer, and running duration of the transmission duration timer is 20 ms. Within a running period of the transmission duration timer, the terminal may automatically rotate the retransmission resource to retransmit the first uplink data.

Alternatively, the quantity of transmission times or the transmission duration of the first uplink data may also be specified in a protocol. Based on specifications in the protocol, the terminal can stop sending or retransmitting the first uplink data after the condition of the quantity of transmission times or the transmission duration is met.

Alternatively, the terminal may stop sending or retransmitting the first uplink data based on the received preset indication information, and the preset indication information may be sent by the network side device. It should be noted that the preset indication information sent by the network side device may also be feedback information that is sent by the network side device and that is used to instruct the terminal to send the second uplink data.

In the technical solution provided in this embodiment of this application, the terminal sends the first uplink data to the network side device, and in a case that it is confirmed that failure of sending of the first uplink data occurs, the terminal may retransmit the first uplink data. In this way, in a case that data transmission fails, the terminal does not discard transmission of the data, but can retransmit data that fails to be transmitted, to avoid a loss of data. This increases a probability that the network side device successfully receives data, and improves reliability of data transmission between the terminal and the network side device.

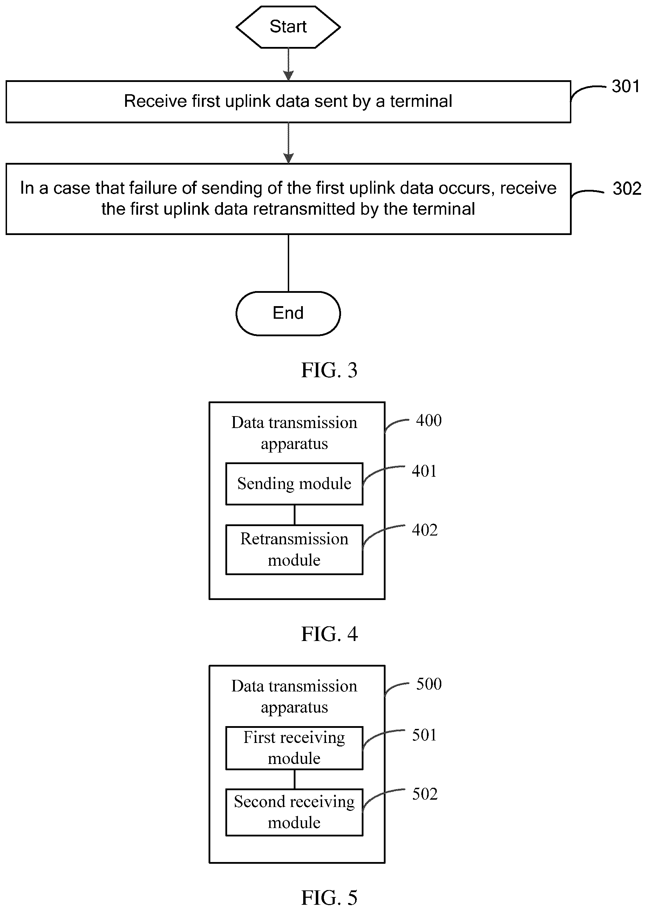

FIG. 3 shows another data transmission method according to an embodiment of this application. The data transmission method is applied to a network side device. As shown in FIG. 3, the data transmission method includes the following steps.

Step 301: Receive first uplink data sent by a terminal.

Step 302: In a case that failure of sending of the first uplink data occurs, receive the first uplink data retransmitted by the terminal.

In this embodiment of this application, in a case that sending of the first uplink data sent by the terminal fails, the terminal can retransmit the first uplink data, so that the network side device can receive the first uplink data retransmitted by the terminal, thereby increasing a probability that the first uplink data is successfully received, and improving reliability of data transmission between the terminal and the network side device.

Optionally, before step 301, the method further includes:
sending first configuration information to the terminal, where the first configuration information is used to instruct the terminal to send uplink data by using a target uplink resource, and the target uplink resource includes any one of the following: a dedicated uplink resource and an uplink resource in a random access process; and
the receiving first uplink data sent by a terminal includes:
   receiving the first uplink data sent by the terminal by using the target uplink resource.

Optionally, the dedicated uplink resource may be a dedicated physical uplink shared channel (Physical Uplink Shared Channel, PUSCH) resource. For example, the network side device may configure pur-Config for a terminal in an inactive (inactive) state in a radio resource control (Radio Resource Control, RRC) release message. The configuration indicates that the terminal in the inactive state sends an uplink data-specific PUSCH uplink resource.

Optionally, the method further includes:
sending second configuration information to the terminal, where the second configuration information is used to indicate a quantity of transmission times or transmission duration of the first uplink data.

Optionally, the method further includes:
sending preset instruction information to the terminal, where the preset instruction information is used to instruct the terminal to stop sending or retransmitting the first uplink data.

It should be noted that, for a related concept and a specific implementation of the foregoing technical features in this embodiment of this application, reference may be made to the specific description in the method embodiment in FIG. 2, and details are not described in this embodiment again.

In the solution provided in this embodiment of this application, the network side device receives the first uplink data sent by the terminal, and in a case that failure of sending of the first uplink data occurs, the network side device can receive the first uplink data retransmitted by the terminal again. In this way, in a case that data transmission fails, the terminal does not discard transmission of the data, but can retransmit data that fails to be transmitted, to avoid a loss of data. This increases a probability that the network side device successfully receives data, and improves reliability of data transmission between the terminal and the network side device.

It should be noted that, the data transmission method provided in this embodiment of this application may be performed by a data transmission apparatus or a control module that is in the data transmission apparatus and that is configured to perform the data transmission method. In this embodiment of this application, the data transmission apparatus provided in this embodiment of this application is described by using an example in which the data transmission apparatus performs the data transmission method.

FIG. 4 is a structural diagram of a data transmission apparatus according to an embodiment of this application. The data transmission apparatus is applied to a terminal. As shown in FIG. 4, the data transmission apparatus 400 includes:
a sending module 401, configured to send first uplink data to a network side device; and
a retransmission module 402, configured to retransmit the first uplink data in a case that it is confirmed that failure of sending of the first uplink data occurs.

Optionally, failure of sending of the first uplink data is configured by any one of the following:
feedback information sent by the network side device is not received within preset time; and
receiving failure indication information sent by the network side device is received.

Optionally, the retransmission module 402 is further configured to retransmit the first uplink data in a case that a first preset condition is met, where the first preset condition includes at least one of the following:
that a first timer corresponding to the first uplink data expires, where the first timer is configured to allow to retransmit the first uplink data in a case that the first timer expires; and
that a second timer corresponding to the first uplink data is in a running state, where the second timer is configured to prohibit new uplink data transmission within a running period.

Optionally, a start condition or restart condition of at least one of the first timer and the second timer includes any one of the following:
that the terminal sends second uplink data;
that the terminal retransmits the first uplink data; and
that feedback information sent by the network side device is not received within the preset time.

Optionally, in a case that a second preset condition is met, the first timer stops; where
the second preset condition includes any one of the following:
that the feedback information sent by the network side device is received;
that the second timer stops;
that the second timer expires; and
that the second timer is restarted.

Optionally, in a case that a third preset condition is met, the second timer stops; where
the third preset condition includes: that the feedback information sent by the network side device is received.

Optionally, the feedback information is used to indicate any one of the following:
that the first uplink data is received successfully;
that the first uplink data fails to be received; and
that the terminal sends the second uplink data.

Optionally, the data transmission apparatus 400 further includes:
a receiving module, configured to receive first configuration information sent by the network side device, where the first configuration information is used to instruct the terminal to send uplink data by using a target uplink resource, and the target uplink resource includes any one of the following: a dedicated uplink resource and an uplink resource in a random access process.

The sending module 401 is further configured to:
send the first uplink data to the network side device by using the target uplink resource based on the first configuration information.

Optionally, the resource for retransmitting the first uplink data includes any one of the following:
the dedicated uplink resource; and
the uplink resource in the random access process.

Optionally, the retransmission module 402 is further configured to perform any one of the following:
in a case that the first uplink data is stored in a buffer, extracting the first uplink data from the buffer, and retransmitting the first uplink data by using a hybrid automatic repeat request HARQ process corresponding to a retransmission resource;
obtaining a first HARQ process for sending the first uplink data, and in a case that a HARQ process corresponding to the retransmission resource is the first HARQ process, retransmitting the first uplink data by using the first HARQ process corresponding to the retransmission resource; and
obtaining a first HARQ process for sending the first uplink data, and in a case that a HARQ process corresponding to the retransmission resource is a second HARQ process, retransmitting the first uplink data by using the second HARQ process corresponding to the retransmission resource.

Optionally, a data size capable of sending by the retransmission resource is the same as a data size of the first uplink data.

Optionally, in a case that the data size capable of sending by the retransmission resource is different from the data size of the first uplink data, the first uplink data is retransmitted by using a retransmission channel after being reconfigured; and
a data size of the reconstructed first uplink data matches the data size capable of sending by the retransmission resource.

Optionally, a time location of the retransmission resource is determined by using any one of the following:
a time location at which the terminal determines to perform retransmission; and
a preset quantity of time locations after the time location at which the terminal determines to perform retransmission.

Optionally, the data transmission apparatus 400 further includes:
a stopping module, configured to stop transmission of the first uplink data in a case that a fourth preset condition is met, where the transmission includes sending and retransmission; where
the fourth preset condition includes any one of the following:
   that second configuration information sent by the network side device is received, where the second configuration information is used to indicate a quantity of transmission times or transmission duration of the first uplink data;
a quantity of transmission times or transmission duration of the first uplink data specified in a protocol; and
that preset instruction information is received, where the preset instruction information is used to instruct to stop transmission of the first uplink data.

In this embodiment of this application, in a case that data transmission fails, the data transmission apparatus 400 does not discard transmission of the data, but can retransmit data that fails to be transmitted, to avoid a loss of data. This increases a probability that the network side device successfully receives data, and improves reliability of data transmission between the terminal and the network side device.

The data transmission apparatus in this embodiment of this application may be an apparatus, or may be a component, an integrated circuit, or a chip in a terminal. The apparatus may be a mobile terminal, or may be a non-mobile terminal. For example, the mobile terminal may include but is not limited to the foregoing listed types of terminals 11. The non-mobile terminal may be a server, a network attached storage (Network Attached Storage, NAS), a personal computer (personal computer, PC), a television (television, TV), a teller machine, or a self-service machine. This is not specifically limited in this embodiment of this application.

The data transmission apparatus in this embodiment of this application may be an apparatus with an operating system. The operating system may be an Android (Android) operating system, may be an iOS operating system, or may be another possible operating system. This is not specifically limited in this embodiment of this application.

The data transmission apparatus provided in this embodiment of this application can implement processes implemented in the embodiment of the data transmission method in FIG. 2, and a same technical effect is achieved. To avoid repetition, details are not described herein again.

FIG. 5 is a structural diagram of another data transmission apparatus according to an embodiment of this application. The data transmission apparatus is applied to a network side device. As shown in FIG. 5, the data transmission apparatus 500 includes:
a first receiving module 501, configured to receive first uplink data sent by a terminal; and
a second receiving module 502, configured to: in a case that failure of sending of the first uplink data occurs, receive the first uplink data retransmitted by the terminal.

Optionally, the data transmission apparatus 500 further includes:
a first sending module, configured to send first configuration information to the terminal, where the first configuration information is used to instruct the terminal to send uplink data by using a target uplink resource, and the target uplink resource includes any one of the following: a dedicated uplink resource and an uplink resource in a random access process.

The first receiving module 501 is further configured to:
receive the first uplink data sent by the terminal by using the target uplink resource.

Optionally, the data transmission apparatus further includes:
a second sending module, configured to send second configuration information to the terminal, where the second configuration information is used to indicate a quantity of transmission times or transmission duration of the first uplink data.

Optionally, the data transmission apparatus further includes:
a third sending module, configured to send preset indication information to the terminal, where the preset indication information is used to instruct the terminal to stop sending or retransmission of the first uplink data.

In this embodiment of this application, the data transmission apparatus 500 can receive the first uplink data transmitted by the terminal, to avoid a loss of data, thereby increasing a probability that the network side device successfully receives data, and improving reliability of data transmission between the terminal and the network side device.

The data transmission apparatus in this embodiment of this application may be an apparatus, or may be a component, an integrated circuit, or a chip in a network side device.

The data transmission apparatus provided in this embodiment of this application can implement processes implemented in the embodiment of the data transmission method in FIG. 3, and a same technical effect is achieved. To avoid repetition, details are not described herein again.

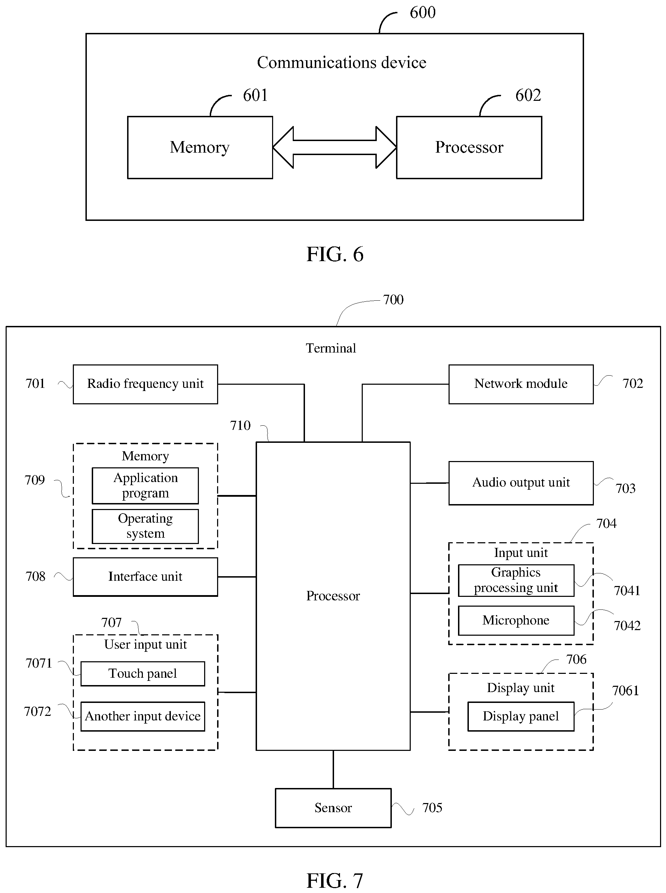

Optionally, as shown in FIG. 6, an embodiment of this application further provides a communication device 600, including a processor 601, a memory 602, a program or an instruction that is stored in the memory 602 and executable on the processor 601. For example, when the communication device 600 is a terminal, the program or the instruction is executed by the processor 601 to implement processes of the method embodiment of the foregoing data transmission method in FIG. 2, and a same technical effect can be achieved. When the communication device 600 is a network side device, when the program or the instruction is executed by the processor 601, processes of the embodiment of the foregoing data transmission method in FIG. 3 are implemented, and a same technical effect can be achieved. To avoid repetition, details are not described herein again.

FIG. 7 is a schematic diagram of a hardware structure of a terminal according to an embodiment of this application.

The terminal 700 includes but is not limited to components such as a radio frequency unit 701, a network module 702, an audio output unit 703, an input unit 704, a sensor 705, a display unit 706, a user input unit 707, an interface unit 708, a memory 709, and a processor 710.

It may be understood by a person skilled in the art that the terminal 700 may further include a power supply (such as a battery) that supplies power to each component. The power supply may be logically connected to the processor 710 by using a power management system, to implement functions such as charging, discharging, and power consumption management by using the power management system. A structure of the terminal shown in FIG. 7 does not constitute a limitation on the terminal device, and may include more or fewer parts than those shown in the figure, or combine some parts, or have different part arrangements. Details are not described herein again.

It should be understood that, in this embodiment of this application, the input unit 704 may include a graphics processing unit (Graphics Processing Unit, GPU) 7041 and a microphone 7042. The graphics processing unit 7041 processes image data of a static picture or a video obtained by an image capture apparatus (such as a camera) in a video capture mode or an image capture mode. The display unit 706 may include a display panel 7061, and the display panel 7061 may be configured in a form of a liquid crystal display, an organic light emitting diode, or the like. The user input unit 707 includes a touch panel 7071 and another input device 7072. The touch panel 7071 is also referred to as a touchscreen. The touch panel 7071 may include two parts: a touch detection apparatus and a touch controller. The another input device 7072 may include but is not limited to one or more of a physical keyboard, a function key (such as a volume control key or an on/off key), a trackball, a mouse, a joystick, and the like. Details are not described herein.

In this embodiment of this application, after receiving downlink data from a network side device, the radio frequency unit 701 sends the downlink data to the processor 710 for processing, and sends uplink data to the network side device. Generally, the radio frequency unit 701 includes but is not limited to an antenna, at least one amplifier, a transceiver, a coupler, a low noise amplifier, a duplexer, and the like.

The memory 709 may be configured to store a software program or an instruction and various data. The memory 709 may mainly include a storage program or instruction area and a storage data area, where the storage program or instruction area may store an operating system, an application program or an instruction required by at least one function (such as a sound play function or an image play function), and the like. In addition, the memory 709 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one magnetic disk storage device, a flash memory device, or another non-volatile solid-state storage device.

The processor 710 may include one or more processing units. Optionally, the processor 710 may be integrated with an application processor and a modem processor. The application processor mainly processes an operating system, a user interface, an application program or an instruction, and the like, and the modem processor mainly processes wireless communication, for example, a baseband processor. It may be understood that the modem processor may also not be integrated into the processor 710.

The radio frequency unit 701 is configured to: send first uplink data to a network side device;
retransmit the first uplink data in a case that it is confirmed that failure of sending of the first uplink data occurs.

Optionally, failure of sending of the first uplink data is confirmed by any one of the following:
feedback information sent by the network side device is not received within preset time; and
receiving failure indication information sent by the network side device is received.

Optionally, the radio frequency unit 701 is further configured to retransmit the first uplink data in a case that a first preset condition is met, where the first preset condition includes at least one of the following: that a first timer corresponding to the first uplink data expires, where the first timer is configured to allow to retransmit the first uplink data in a case that the first timer expires; and
that a second timer corresponding to the first uplink data is in a running state, where the second timer is configured to prohibit new uplink data transmission within a running period.

Optionally, a start condition or restart condition of at least one of the first timer and the second timer includes any one of the following:
that the terminal sends second uplink data;
that the terminal retransmits the first uplink data; and
that the feedback information sent by the network side device is not received within the preset time.

Optionally, in a case that a second preset condition is met, the first timer stops; where
the second preset condition includes any one of the following:
that the feedback information sent by the network side device is received;
that the second timer stops;
that the second timer expires; and
that the second timer is restarted.

Optionally, in a case that a third preset condition is met, the second timer stops; where
the third preset condition includes: that the feedback information sent by the network side device is received.

Optionally, the feedback information is used to indicate any one of the following:
that the first uplink data is received successfully;
that the first uplink data fails to be received; and
that the terminal sends the second uplink data.

Optionally, the radio frequency unit 701 is further configured to:
receive first configuration information sent by the network side device, where the first configuration information is used to instruct the terminal to send uplink data by using a target uplink resource, and the target uplink resource includes any one of the following: a dedicated uplink resource and an uplink resource in a random access process; and
send the first uplink data to the network side device by using the target uplink resource based on the first configuration information.

Optionally, the resource for retransmitting the first uplink data includes any one of the following:
the dedicated uplink resource; and
the uplink resource in the random access process.

Optionally, the radio frequency unit 701 is further configured to implement any one of the following:
in a case that the first uplink data is stored in a buffer, extracting the first uplink data from the buffer, and retransmitting the first uplink data by using a hybrid automatic repeat request HARQ process corresponding to a retransmission resource;
obtaining a first HARQ process for sending the first uplink data, and in a case that a HARQ process corresponding to the retransmission resource is the first HARQ process, retransmitting the first uplink data by using the first HARQ process corresponding to the retransmission resource; and
obtaining a first HARQ process for sending the first uplink data, and in a case that a HARQ process corresponding to the retransmission resource is a second HARQ process, retransmitting the first uplink data by using the second HARQ process corresponding to the retransmission resource.

Optionally, a data size capable of sending by the retransmission resource is the same as a data size of the first uplink data.

Optionally, in a case that the data size capable of sending by the retransmission resource is different from the data size of the first uplink data, the first uplink data is retransmitted by using a retransmission channel after being reconfigured; and
a data size of the reconstructed first uplink data matches the data size capable of sending by the retransmission resource.

Optionally, a time location of the retransmission resource is determined by using any one of the following:
a time location at which the terminal determines to perform retransmission; and
a preset quantity of time locations after the time location at which the terminal determines to perform retransmission.

Optionally, the processor 710 is configured to:
stop transmission of the first uplink data in a case that a fourth preset condition is met, where the transmission includes sending and retransmission; where
the fourth preset condition includes any one of the following:
   that second configuration information sent by the network side device is received, where the second configuration information is used to indicate a quantity of transmission times or transmission duration of the first uplink data;
   a quantity of transmission times or transmission duration of the first uplink data specified in a protocol; and
   that preset instruction information is received, where the preset instruction information is used to instruct to stop transmission of the first uplink data.

In this embodiment of this application, the terminal sends the first uplink data to the network side device, and in a case that it is confirmed that failure of sending of the first uplink data occurs, the terminal may retransmit the first uplink data. In this way, in a case that data transmission fails, the terminal does not discard transmission of the data, but can retransmit data that fails to be transmitted, to avoid a loss of data. This increases a probability that the network side device successfully receives data, and improves reliability of data transmission between the terminal and the network side device.

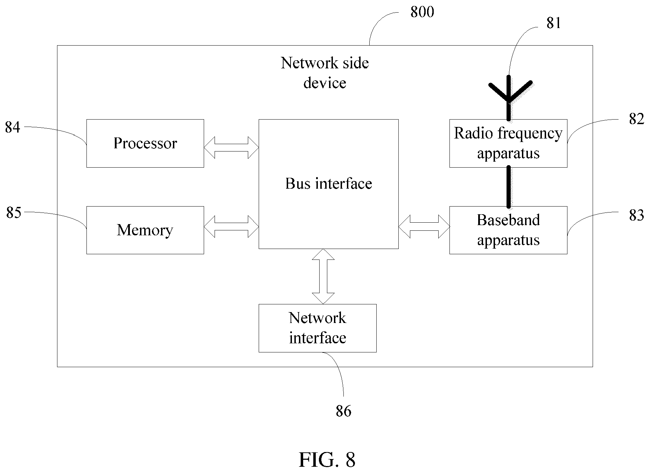

Specifically, an embodiment of this application further provides a network side device. As shown in FIG. 8, the network device 800 includes an antenna 81, a radio frequency apparatus 82, and a baseband apparatus 83. The antenna 81 is connected to the radio frequency apparatus 82. In an uplink direction, the radio frequency apparatus 82 receives information by using the antenna 81, and sends the received information to the baseband apparatus 83 for processing. In a downlink direction, the baseband apparatus 83 processes to-be-sent information, and sends the to-be-sent information to the radio frequency apparatus 82. After processing the received information, the radio frequency apparatus 82 sends the information by using the antenna 81.

The foregoing band processing apparatus may be located in the baseband apparatus 83. In the foregoing embodiment, a method performed by the network side device may be implemented in the baseband apparatus 83. The baseband apparatus 83 includes a processor 84 and a memory 85.

For example, the baseband apparatus 83 may include at least one baseband board. Multiple chips are disposed on the baseband board. As shown in FIG. 8, one chip is, for example, the processor 84, and is connected to the memory 85, to invoke a program in the memory 85 to perform an operation of the network side device shown in the foregoing method embodiment.

The baseband apparatus 83 may further include a network interface 86, configured to exchange information with the radio frequency apparatus 82, where the interface is, for example, a common public radio interface (common public radio interface, CPRI).

Specifically, the network side device in this embodiment of the present invention further includes an instruction or a program that is stored in the memory 85 and executable on the processor 84. The processor 84 invokes the instruction or the program in the memory 85 to perform the method performed by the modules shown in FIG. 5, and a same technical effect is achieved. To avoid repetition, details are not described herein.

An embodiment of this application further provides a readable storage medium, and the readable storage medium stores a program or an instruction. When the program or the instruction is executed by a processor, processes in the embodiment of the foregoing data transmission method in FIG. 2 are implemented, or when the program or the instruction is executed by a processor, processes in the embodiment of the foregoing data transmission method in FIG. 3 are implemented, and a same technical effect can be achieved. To avoid repetition, details are not described herein again.

The processor is a processor in the terminal in the foregoing embodiment. The readable storage medium includes a computer-readable storage medium such as a read-only memory (Read-Only Memory, ROM), a random access memory (Random Access Memory, RAM), a magnetic disk, an optical disc, or the like.

An embodiment of this application further provides a chip. The chip includes a processor and a communication interface, the communication interface is coupled to the processor, and the processor is configured to execute a program or an instruction of a network side device to implement the processes of the embodiment of the foregoing data transmission method in FIG. 2, or the processes of the embodiment of the foregoing data transmission method in FIG. 3, and a same technical effect can be achieved. To avoid repetition, details are not described herein again.

It should be understood that the chip mentioned in this embodiment of this application may also be referred to as a system-level chip, a system chip, a chip system, or a system on a chip.

It may be understood that the embodiments described in the present disclosure may be implemented by hardware, software, firmware, middleware, microcode, or a combination thereof. For hardware implementation, a module, a unit, a submodule, a subunit, or the like may be implemented in one or more application specific integrated circuits (Application Specific Integrated Circuits, ASIC), a digital signal processor (Digital Signal Processing, DSP), a digital signal processing device (DSP Device, DSPD), a programmable logic device (Programmable Logic Device, PLD), a field-programmable gate array (Field-Programmable Gate Array, FPGA), a general purpose processor, a controller, a microcontroller, a microprocessor, another electronic unit configured to perform the functions described in this application, or a combination thereof.

It should be noted that in this specification, the term "include", "including", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. In the absence of more restrictions, an element defined by the statement "including a..." does not exclude another same element in a process, method, article, or apparatus that includes the element. In addition, it should be noted that a scope of the method and the apparatus in the embodiments of this application is not limited to: performing a function in a sequence shown or discussed, and may further include: performing a function in a basically simultaneous manner or in a reverse sequence based on an involved function. For example, the described method may be performed in a different order, and various steps may be added, omitted, or combined. In addition, features described with reference to some examples may be combined in other examples.

According to the descriptions of the foregoing implementations, a person skilled in the art may clearly understand that the foregoing method embodiments may be implemented by using software and a required universal hardware platform, or certainly may be implemented by using hardware. However, in many cases, the former is a better implementation. Based on such an understanding, the technical solutions of this application essentially or the part contributing to existing technologies may be implemented in a form of a software product. The computer software product is stored in a storage medium (such as a ROM/RAM, a magnetic disk, or an optical disc) and includes several instructions for instructing a terminal (which may be a mobile phone, a computer, a server, an air conditioner, or a network device) to execute the methods described in the embodiments of this application.

The embodiments of this application are described with reference to the accompanying drawings. However, this application is not limited to the foregoing specific implementations. The foregoing specific implementations are merely examples, but are not limiting. A person of ordinary skill in the art may make many forms without departing from the objective and the scope of the claims of this application, and these forms all fall within the protection scope of this application.

## Claims

1. A data transmission method, applied to a terminal and comprising:
sending first uplink data to a network side device; and
retransmitting the first uplink data in a case that it is confirmed that failure of sending of the first uplink data occurs.

2. The method according to claim 1, wherein failure of sending the first uplink data is confirmed by using any one of following:
feedback information sent by the network side device is not received within preset time;
and
receiving failure indication information sent by the network side device is received.

3. The method according to claim 1, wherein the retransmitting the first uplink data comprises: retransmitting the first uplink data in a case that a first preset condition is met; wherein
the first preset condition comprises at least one of following:
that a first timer corresponding to the first uplink data expires, wherein the first timer is configured to allow to retransmit the first uplink data in a case that the first timer expires; and
that a second timer corresponding to the first uplink data is in a running state, wherein the second timer is configured to prohibit new uplink data transmission within a running period.

4. The method according to claim 3, wherein a start condition or a restart condition of at least one of the first timer and the second timer comprises any one of following:
that the terminal sends second uplink data;
that the terminal retransmits the first uplink data; and
that feedback information sent by the network side device is not received within the preset time.

5. The method according to claim 3, wherein in a case that a second preset condition is met, stopping the first timer; wherein
the second preset condition comprises any one of following:
that feedback information sent by the network side device is received;
that the second timer stops;
that the second timer expires; and
that the second timer is restarted.

6. The method according to claim 3, wherein in a case that a third preset condition is met, stopping the second timer; wherein
the third preset condition comprises: that the feedback information sent by the network side device is received.

7. The method according to claim 2, 4, 5, or 6, wherein the feedback information is used to indicate any one of following:
that the first uplink data is received successfully;
that the first uplink data fails to be received; and
that the terminal sends the second uplink data.

8. The method according to claim 1, wherein before the sending the first uplink data to the network side device, the method further comprises:
receiving first configuration information sent by the network side device, wherein the first configuration information is used to instruct the terminal to send uplink data by using a target uplink resource, and the target uplink resource comprises any one of following: a dedicated uplink resource and an uplink resource in a random access process; and
the sending the first uplink data to the network side device comprises:
sending the first uplink data to the network side device by using the target uplink resource based on the first configuration information.

9. The method according to claim 8, wherein a resource for retransmitting the first uplink data comprises any one of following:
the dedicated uplink resource; and
the uplink resource in the random access process.

10. The method according to claim 1, wherein the retransmitting the first uplink data comprises any one of following:
in a case that the first uplink data is stored in a buffer, extracting the first uplink data from the buffer, and retransmitting the first uplink data by using a hybrid automatic repeat request HARQ process corresponding to a retransmission resource;
obtaining a first HARQ process for sending the first uplink data, and in a case that a HARQ process corresponding to the retransmission resource is the first HARQ process, retransmitting the first uplink data by using the first HARQ process corresponding to the retransmission resource; and
obtaining a first HARQ process for sending the first uplink data, and in a case that a HARQ process corresponding to the retransmission resource is a second HARQ process, retransmitting the first uplink data by using the second HARQ process corresponding to the retransmission resource.

11. The method according to claim 10, wherein a data size capable of sending by the retransmission resource is the same as a data size of the first uplink data.

12. The method according to claim 10, wherein in a case that a data size capable of sending by the retransmission resource is different from a data size of the first uplink data, the first uplink data is retransmitted through a retransmission channel after being reconstructed; and
a data size of the reconstructed first uplink data matches the data size capable of sending by the retransmission resource.

13. The method according to claim 10, wherein a time location of the retransmission resource is determined by using any one of following:
a time location at which the terminal determines to perform retransmission; and
a preset quantity of time locations after the time location at which the terminal determines to perform retransmission.

14. The method according to claim 1, further comprising:
stopping transmission of the first uplink data in a case that a fourth preset condition is met, wherein the transmission comprises sending and retransmission; wherein
the fourth preset condition comprises any one of following:
that second configuration information sent by the network side device is received, wherein the second configuration information is used to indicate a quantity of transmission times or transmission duration of the first uplink data;
a quantity of transmission times or transmission duration of the first uplink data specified in a protocol; and
that preset instruction information is received, wherein the preset instruction information is used to instruct to stop transmission of the first uplink data.

15. A data transmission method, applied to a network side device and comprising:
receiving first uplink data sent by a terminal; and
in a case that failure of sending of the first uplink data occurs, receiving the first uplink data retransmitted by the terminal.

16. The method according to claim 15, wherein before the receiving first uplink data sent by the terminal by using a dedicated uplink resource, the method further comprises:
sending first configuration information to the terminal, wherein the first configuration information is used to instruct the terminal to send uplink data by using a target uplink resource, and the target uplink resource comprises any one of the following: a dedicated uplink resource and an uplink resource in a random access process; and
the receiving first uplink data sent by a terminal comprises:
receiving the first uplink data sent by the terminal by using the target uplink resource.

17. The method according to claim 15, further comprising:
sending second configuration information to the terminal, wherein the second configuration information is used to indicate a quantity of transmission times or transmission duration of the first uplink data.

18. The method according to claim 15, further comprising:
sending preset instruction information to the terminal, wherein the preset instruction information is used to instruct the terminal to stop sending or retransmitting the first uplink data.

19. A data transmission apparatus, applied to a terminal and comprising:
a sending module, configured to send first uplink data to a network side device; and
a retransmission module, configured to retransmit the first uplink data in a case that it is confirmed that failure sending of the first uplink data occurs.

20. The apparatus according to claim 19, wherein failure of sending the first uplink data is confirmed by using any one of the following:
feedback information sent by the network side device is not received within preset time; and
receiving failure indication information sent by the network side device is received.

21. The apparatus according to claim 19, wherein the retransmission module is further configured to retransmit the first uplink data in a case that a first preset condition is met; wherein
the first preset condition comprises at least one of the following:
that a first timer corresponding to the first uplink data expires, wherein the first timer is configured to allow to retransmit the first uplink data in a case that the first timer expires; and
that a second timer corresponding to the first uplink data is in a running state, wherein the second timer is configured to prohibit new uplink data transmission within a running period.

22. The apparatus according to claim 21, wherein a start condition or a restart condition of at least one of the first timer and the second timer comprises any one of the following:
that the terminal sends second uplink data;
that the terminal retransmits the first uplink data; and
that feedback information sent by the network side device is not received within the preset time.

23. The apparatus according to claim 21, wherein in a case that a second preset condition is met, the first timer stops; wherein
the second preset condition comprises any one of the following:
that feedback information sent by the network side device is received;
that the second timer stops;
that the second timer expires; and
that the second timer is restarted.

24. The apparatus according to claim 21, wherein in a case that a third preset condition is met, the second timer stops; wherein
the third preset condition comprises: that the feedback information sent by the network side device is received.

25. The apparatus according to claim 20, 22, 23, or 24, wherein the feedback information is used to indicate any one of the following:
that the first uplink data is received successfully;
that the first uplink data fails to be received; and
that the terminal sends the second uplink data.

26. The apparatus according to claim 19, further comprising:
a receiving module, configured to receive first configuration information sent by the network side device, wherein the first configuration information is used to instruct the terminal to send uplink data by using a target uplink resource, and the target uplink resource comprises any one of the following: a dedicated uplink resource and an uplink resource in a random access process; and
the sending module is further configured to:
send the first uplink data to the network side device by using the target uplink resource based on the first configuration information.

27. The apparatus according to claim 26, wherein a resource for retransmitting the first uplink data comprises any one of the following:
the dedicated uplink resource; and
the uplink resource in the random access process.

28. The apparatus according to claim 19, wherein the retransmission module is further configured to perform any one of the following:
in a case that the first uplink data is stored in a buffer, extracting the first uplink data from the buffer, and retransmitting the first uplink data by using a hybrid automatic repeat request HARQ process corresponding to a retransmission resource;
obtaining a first HARQ process for sending the first uplink data, and in a case that a HARQ process corresponding to the retransmission resource is the first HARQ process, retransmitting the first uplink data by using the first HARQ process corresponding to the retransmission resource; and
obtaining a first HARQ process for sending the first uplink data, and in a case that a HARQ process corresponding to the retransmission resource is a second HARQ process, retransmitting the first uplink data by using the second HARQ process corresponding to the retransmission resource.

29. The apparatus according to claim 28, wherein a data size capable of sending by the retransmission resource is the same as a data size of the first uplink data.

30. The apparatus according to claim 28, wherein in a case that a data size capable of sending by the retransmission resource is different from a data size of the first uplink data, the first uplink data is retransmitted through a retransmission channel after being reconstructed; and
a data size of the reconstructed first uplink data matches the data size capable of sending by the retransmission resource.

31. The apparatus according to claim 28, wherein a time location of the retransmission resource is determined by using any one of the following:
a time location at which the terminal determines to perform retransmission; and
a preset quantity of time locations after the time location at which the terminal determines to perform retransmission.

32. The apparatus according to claim 19, further comprising:
a stopping module, configured to stop transmission of the first uplink data in a case that a fourth preset condition is met, wherein the transmission comprises sending and retransmission; wherein
the fourth preset condition comprises any one of following:
that second configuration information sent by the network side device is received, wherein the second configuration information is used to indicate a quantity of transmission times or transmission duration of the first uplink data;
a quantity of transmission times or transmission duration of the first uplink data specified in a protocol; and
that preset instruction information is received, wherein the preset instruction information is used to instruct to stop transmission of the first uplink data.

33. A data transmission apparatus, applied to a network side device and comprising:
a first receiving module, configured to receive first uplink data sent by a terminal; and
a second receiving module, configured to: in a case that failure of sending of the first uplink data occurs, receive the first uplink data retransmitted by the terminal.

34. A communication device, comprising a processor, a memory, and a program or instruction that is stored in the memory and executable on the processor, wherein when the program or the instruction is executed by the processor, steps in the data transmission method in any one of claims 1 to 14 are implemented, or when the program or the instruction is executed by the processor, steps in the data transmission method in any one of claims 15 to 18 are implemented.

35. A readable storage medium, wherein a program or an instruction is stored on the readable storage medium, and when the program or the instruction is executed by a processor, steps in the data transmission method in any one of claims 1 to 14 are implemented, or when the program or the instruction is executed by the processor, steps in the data transmission method in any one of claims 15 to 18 are implemented.

36. A chip, comprising a processor and a communication interface, wherein the communication interface is coupled to the processor, and the processor is configured to execute a program or an instruction of a device to implement steps in the data transmission method in any one of claims 1 to 14 or the steps in the data transmission method in any one of claims 15 to 18.
